# EUROPEAN PATENT APPLICATION

(11) **EP 2 765 796 A1**
(43) Date of publication of application: **13.08.2014**
(21) Application number: 12844973.3
(22) Date of filing: 05.11.2012
(51) Int. Cl.: H04W 24/08

(54) **CHANNEL QUALITY MEASURING METHOD AND DEVICE**

(30) Priority: 04.11.2011 CN 201110347632
(71) Applicant: Huawei Technologies Co., Ltd., Shenzhen, Guangdong 518129 (CN)
(72) Inventor: ZHOU, Mingyu, Shenzhen Guangdong 518129 (CN); XIA, Liang, Shenzhen Guangdong 518129 (CN); ZHOU, Yongxing, Shenzhen Guangdong 518129 (CN)
(74) Representative: Maiwald Patentanwalts GmbH
(86) International application number: PCT/CN2012/084067
(87) International publication number: WO 2013/064111

(57) **Abstract**

Embodiments of the present invention provide a method and a device for measuring channel quality. The method includes: receiving first signal characteristic information and second signal characteristic information sent by a network side, where the first signal characteristic information is used to indicate a first signal, and the second signal characteristic information is used to indicate a second signal; receiving, in sequence, a downlink signal sent by each node in multiple nodes, obtaining a downlink channel response of each node according to the first signal in the downlink signal sent by each node, and obtaining downlink interference of each node according to the second signal in the downlink signal sent by each node; obtaining downlink channel quality information of each node separately according to the downlink channel response and the downlink interference of each node; and reporting the downlink channel quality information of each node separately to the network side. According to the embodiments of the present invention, overheads for the node to send signaling is greatly lowered.

## Description

### CROSS-REFERENCE TO RELATED APPLICATION

This application claims priority to Chinese Patent Application No. 201110347632.1, filed with the Chinese Patent Office on November 4, 2011 and entitled "METHOD AND DEVICE FOR MEASURING CHANNEL QUALITY", which is incorporated herein by reference in its entirety.

### TECHNICAL FIELD

The present invention relates to the field of communications technologies, and in particular, to a method and a device for measuring channel quality.

### BACKGROUND

In a conventional wireless communication system, each cell independently communicates with different user equipments (User Equipment, UE) accessing the cell. Before controlling a node corresponding to the cell to send downlink data to the UEs, a base station needs to obtain downlink channel quality information, such as, a signal to interference plus noise ratio (Signal to Interference plus Noise Ratio, SINR), so that the cell properly schedules downlink transmission.

In the prior art, the base station needs to control the node to instruct the UE about a signal required for measuring a downlink channel response and configuration information of the signal required for measuring the downlink channel response, and a signal required for measuring downlink interference and configuration information of the signal required for measuring the downlink interference, so as to make the UE obtain downlink channel quality information according the downlink channel response and the downlink interference obtained by means of measuring based on the instruction, and feed back the downlink channel quality information to the base station, and to make a network side device schedule the downlink transmission according to the downlink channel quality information fed back by the UE.

However, if a coordinated multiple node transmission/reception (Coordinated Multiple node transmission/reception, CoMP) technology is adopted, that is, multiple nodes serve a same UE in a coordination manner, the multiple nodes need to instruct the UE about the signal required for measuring the downlink channel response and the configuration information of the signal required for measuring the downlink channel response, and the signal required for measuring the downlink interference and the configuration information of the signal for measuring the downlink interference, thereby resulting in great signaling overheads on the network side.

### SUMMARY

Embodiments of the present invention provide a method and a device for measuring channel quality, so as to save signaling overheads on a network side.

According to one aspect, an embodiment of the present invention provides a method for measuring channel quality, including:
receiving first signal characteristic information and second signal characteristic information sent by a network side, where the first signal characteristic information is used to indicate a first signal, and the second signal characteristic information is used to indicate a second signal;
receiving, in sequence, a downlink signal sent by each node in multiple nodes, obtaining a downlink channel response of each node according to the first signal in the downlink signal sent by each node, and obtaining downlink interference of each node according to the second signal in the downlink signal sent by each node;
obtaining downlink channel quality information of each node separately according to the downlink channel response and the downlink interference of each node; and
reporting the downlink channel quality information of each node separately to the network side.

An embodiment of the present invention further provides another method for measuring channel quality, including:
controlling at least one node on a network side to send first signal characteristic information and second signal characteristic information to a user equipment UE, where the first signal characteristic information is used to indicate a first signal, and the second signal characteristic information is used to indicate a second signal;
controlling multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node;
receiving downlink channel quality information of each node in the multiple nodes, where the downlink channel quality information is obtained by the UE and reported by at least one node on the network side; and
scheduling downlink transmission of each node according to the downlink channel quality information of each node in the multiple nodes.

An embodiment of the present invention further provides another method for measuring channel quality, including:
sending, under control of a base station, first signal characteristic information and/or second signal characteristic information to a user equipment UE, where the first signal characteristic information is used to indicate a first signal, and the second signal characteristic information is used to indicate a second signal, so that the UE obtains a downlink channel response of each node according to the first signal in a downlink signal sent by each node in the multiple nodes, and obtains downlink interference of each node according to the second signal in the downlink signal sent by each node.

According to another aspect, an embodiment of the present invention provides a user equipment UE, including:
a receiver, configured to receive first signal characteristic information and second signal characteristic information sent by a network side, where the first signal characteristic information is used to indicate a first signal, and the second signal characteristic information is used to indicate a second signal; and configured to receive, in sequence, a downlink signal sent by each node in multiple nodes;
a processor, configured to obtain a downlink channel response of each node according to the first signal in the downlink signal sent by each node, and obtain downlink interference of each node according to the second signal in the downlink signal sent by each node; and configured to obtain downlink channel quality information of each node separately according to the downlink channel response and the downlink interference of each node; and
a transmitter, configured to report the downlink channel quality information of each node separately to the network side.

An embodiment of the present invention further provides a base station, including:
a controller, configured to control at least one node on a network side to send first signal characteristic information and second signal characteristic information to a user equipment UE, where the first signal characteristic information is used to indicate a first signal, and the second signal characteristic information is used to indicate a second signal; and control multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node;
a receiver, configured to receive downlink channel quality information of each node in the multiple nodes, where the downlink channel quality information is obtained by the UE and reported by at least one node on the network side; and
a processor, configured to schedule downlink transmission of each node according to the downlink channel quality information of each node in the multiple nodes.

An embodiment of the present invention further provides a node, including:
a transmitter, configured to send, under control of a base station, first signal characteristic information and/or second signal characteristic information to a user equipment UE, where the first signal characteristic information is used to indicate a first signal, and the second signal characteristic information is used to indicate a second signal, so that the UE obtains a downlink channel response of each node according to the first signal in a downlink signal sent by each node in multiple nodes, and obtains downlink interference of each node according to the second signal in the downlink signal sent by each node.

According to the method and the device for measuring channel quality provided in the embodiments of the present invention, a base station controls a node to send, to a UE, first signal characteristic information indicating a first signal and second signal characteristic information indicating a second signal, and controls multiple nodes to send downlink signals to the UE in turn. When receiving the downlink signal sent by each node, the UE may obtain a downlink channel response according to the first signal in the downlink signal, and obtain downlink channel interference according to the second signal characteristic information in the downlink signal, so as to obtain downlink channel quality information of each node and feed back the downlink channel quality to the base station. It is achieved that the UE measures all the nodes as long as a network side indicates the first signal characteristic information and the second signal characteristic information to the UE, thereby greatly lowering overheads for the node to send signaling.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of a method for measuring channel quality according to the present invention;
FIG. 2 is a flowchart of another embodiment of a method for measuring channel quality according to the present invention;
FIG. 3 is a flowchart of still another embodiment of a method for measuring channel quality according to the present invention;
FIG. 4 is a flowchart of an embodiment of measuring, by a UE according to first signal characteristic information, a downlink signal sent by each node and obtaining a corresponding downlink channel response according to the present invention;
FIG. 5 is a flowchart of an embodiment of measuring, by a UE according to second signal characteristic information, a downlink signal sent by each node and obtaining corresponding downlink interference according to the present invention;
FIG. 6 is a flowchart of another embodiment of measuring, by a UE according to second signal characteristic information, a downlink signal sent by each node and obtaining corresponding downlink interference according to the present invention;
FIG. 7 is a schematic structural diagram of an embodiment of a UE according to the present invention;
FIG. 8 is a schematic structural diagram of an embodiment of a base station according to the present invention;
FIG. 9 is a schematic structural diagram of an embodiment of a node according to the present invention; and
FIG. 10 is a schematic structural diagram of another embodiment of a node according to the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

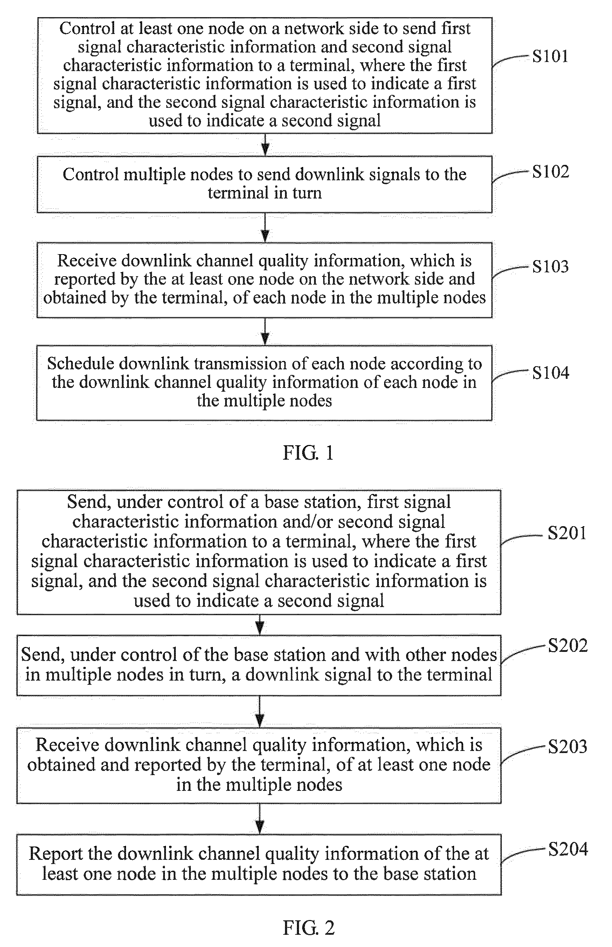

FIG. 1 is a flowchart of an embodiment of a method for measuring channel quality according to the present invention. As shown in FIG. 1, the method includes:
S101: Control at least one node on a network side to send first signal characteristic information and second signal characteristic information to a UE, where the first signal characteristic information is used to indicate a first signal, and the second signal characteristic information is used to indicate a second signal.
S102: Control multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node.
S103: Receive downlink channel quality information of each node in the multiple nodes, where the downlink channel quality information is obtained by the UE and reported by at least one node on the network side.
S104: Schedule downlink transmission of each node according to the downlink channel quality information of each node in the multiple nodes.

The foregoing steps are executed by a base station. The present invention relates to a scenario in which the network side requires the UE to measure the downlink channel quality information of the multiple nodes, such as a CoMP scenario, that is, a situation in which the UE needs to report the downlink channel quality of the multiple nodes to the base station. The downlink channel response (the strength, the amplitude, and the phase of the downlink signal).

The node may be a device having receiving and sending functions, such as an access point (Access Point, AP), remote radio equipment (Remote Radio Equipment, RRE), a remote radio head (Remote Radio Head, RRH), a remote radio unit (Remote Radio Unit, RRU), a relay (Relay) node, and an antenna unit in a base station or in a home base station. One node may correspond to one cell of the UE.

A device on the network side which sends the first signal characteristic information and the second signal characteristic information to the UE may be any node in the multiple nodes needing to be measured, and may also be other nodes on the network side except the multiple nodes; the base station may control at least one node in the foregoing optional nodes to send, by using a piece of signaling, the first signal characteristic information and the second signal characteristic information to the UE, and may also send, by using two pieces of signaling, the first signal characteristic information and the second signal characteristic information separately to the UE. The signaling carrying the first signal characteristic information and the second signal characteristic information may specifically be radio resource control (Radio Resource Control, RRC) signaling or media access control (Media Access Control, MAC).

The first signal characteristic information is used to indicate the first signal, so that when receiving the downlink signal sent by each node in the multiple nodes, the UE may measure the first signal in the downlink signal to obtain the downlink channel response. For example, the first signal indicated by the first signal characteristic information may be a channel state information reference signal (Channel State Information Reference Signal, CSI-RS), and the first signal characteristic information may include configuration information of the CSI-RS, such as transmission time, a transmission periodicity, a time-frequency grid, or a number of an antenna port for transmission. When receiving the downlink signal sent by each node, the UE measures the CSI-RS by using the configuration information of the CSI-RS, which is included in the first signal characteristic information, so as to obtain the downlink channel response. For example, if the configuration information of the CSI-RS is transmission time when the downlink signal is sent: 0^{th}*,* 5^{th}, 10^{th}...transmission time intervals (Transmission Time Interval, TTI), when receiving the downlink signal sent by each node, the UE measures the CSI-RS on the 0^{th}*,* 5^{th}, 10^{th}...TTIs to obtain the downlink channel response. If the configuration information of the CSI-RS is antenna port numbers: 1, 3, 5, 7..., when receiving the downlink signal sent by each node, the UE measures the CSI-RS on an antenna with port numbers 1, 3, 5, 7... to obtain the downlink channel response.

The second signal characteristic information is used to indicate the second signal, so that when receiving the downlink signal sent by each node in the multiple nodes, the UE may measure the second signal in the downlink signal to obtain the downlink interference. For example, the second signal indicated by the second signal characteristic information may be a data field signal or a CSI-RS or the like, and the second signal characteristic information may include configuration information of the data field signal or the configuration information of the CSI-RS, such as transmission time, a transmission periodicity, a time-frequency grid, or a number of an antenna port for transmission. When receiving the downlink signal sent by each node, the UE measures the data field signal or the CSI-RS by using the configuration information of the data field signal or the configuration information of the CSI-RS, which is included in the second signal characteristic information, so as to obtain the downlink interference. For example, if the configuration information of the data field is transmission time when the downlink signal is sent: 2^{nd}, 4^{th}, 6^{th}, 8^{th}...TTIs, when receiving the downlink signal sent by each node, the UE measures the data field signal on the 2^{nd}, 4^{th}, 6^{th}, 8^{th}...TTIs to obtain the downlink interference.

As an optional implementation manner, the first signal characteristic information may be used to indicate the first signal of a node corresponding to a secondary cell of the UE, and the second signal characteristic information may be used to indicate the second signal of the node corresponding to the secondary cell of the UE. In this case, the base station may control each node corresponding to a secondary cell of the UE to send the downlink signal to the UE in turn. After receiving the downlink signal sent by each node corresponding to a secondary cell, the UE may measure the first signal in the downlink signal to obtain the downlink channel response of each node; in the same way, after receiving the downlink signal sent by each node corresponding to a secondary cell, the UE may measure the second signal in the downlink signal to obtain the downlink interference of each node. The base station may control a node corresponding to a primary cell of the UE to send the downlink signal to the UE in a period of time different from a period of time in which a node of a secondary cell sends the downlink signal to the UE, so that the UE may measure the downlink channel quality information corresponding to the node of the primary cell by using the prior art.

It should be noted that, the UE does not know from which node a downlink signal received in a certain period of time comes. The base station may control the UE to measure, in the same period of time, the downlink channel response of each node and the downlink interference of each node, and may also control the UE to measure, in different periods of time, the downlink channel response of each node and the downlink interference of each node. When the base station controls the UE to measure, in different periods of time, the downlink channel response of each node and the downlink interference of each node, the base station may control a sequence of sending, by each node in different periods of time, the downlink signal to the UE to remain unchanged, so that the UE may determine, according to a sequence of obtaining the downlink channel response and a sequence of obtaining the downlink interference, which obtained downlink channel response and downlink interference correspond to a same node, so as to obtain downlink channel quality of each node. The UE may also report the downlink channel quality of each node to the base station according to a sequence of receiving the downlink signal.

As another feasible implementation manner, the first signal characteristic information may be used to indicate the first signal of a node corresponding to a primary cell of the UE and the first signal of a node corresponding to a secondary cell of the UE, and the second signal characteristic information may be used to indicate the second signal of the node corresponding to the primary cell of the UE and the second signal of the node corresponding to the secondary cell of the UE. In this case, the base station may control the node of the primary cell and each node of a secondary cell to send downlink signals to the UE in turn, and then, after receiving the downlink signal sent by each node, the UE may measure the first signal in the downlink signal to obtain the downlink channel response of each node; in the same way, after receiving the downlink signal sent by each node, the UE may measure the second signal in the downlink signal to obtain the downlink interference of each node.

It should be noted that, for multiple cells (corresponding to multiple nodes) needing to be measured by the UE, the UE receives downlink control signaling, such as signaling transmitted on a physical downlink control channel (physical downlink control channel, PDCCH) in an LTE-Advanced system, or broadcast information, such as information transmitted on a physical broadcast channel (Physical Broadcast Channel, PBCH) in the LTE-Advanced system, only from one cell, the cell is the primary cell of the UE, and other cells are secondary cells.

According to the method for measuring channel quality provided in this embodiment, the base station controls the node to send, to the UE, the first signal characteristic information indicating the first signal and the second signal characteristic information indicating the second signal, and controls the multiple nodes to send the downlink signals to the UE in turn. When receiving the downlink signal sent by each node, the UE may obtain the downlink channel response according to the first signal in the downlink signal, and obtain the downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

FIG. 2 is a flowchart of another embodiment of a method for measuring channel quality according to the present invention. As shown in FIG. 2, the method includes:

S201: Send, under control of a base station, first signal characteristic information and/or second signal characteristic information to a UE, where the first signal characteristic information is used to indicate a first signal, and the second signal characteristic information is used to indicate a second signal, so that the UE obtains a downlink channel response of each node according to the first signal in a downlink signal sent by each node in multiple nodes, and obtains downlink interference of each node according to the second signal in the downlink signal sent by each node.

The foregoing step is executed by a node. The node may be any one of multiple nodes, of which the UE needs to measure downlink channel quality information, and may also be other nodes on a network side except the multiple nodes. Specifically, the node may be a device having receiving and sending functions, such as an access point (AP), an RRE, an RRH, an RRU, a relay (Relay) node, and an antenna unit in a base station or a home base station. One node may correspond to one cell of the UE.

Further, if this embodiment is executed by any one of the multiple nodes needing to be measured by the UE, this embodiment may further include S202:
S202: Send, under control of the base station and with other nodes in the multiple nodes in turn, the downlink signal to the UE.

Optionally, based on S202, this embodiment may further include:
S203: Receive downlink channel quality information, which is obtained and reported by the UE, of at least one node in the multiple nodes.
S204: Report the downlink channel quality information of at least one node in the multiple nodes to the base station.

According to the method for measuring channel quality provided in this embodiment, the node sends, under control of the base station, to the UE, the first signal characteristic information indicating the first signal and the second signal characteristic information indicating the second signal, and the multiple nodes are controlled to send the downlink signals to the UE in turn. When receiving the downlink signal sent by each node, the UE may obtain the downlink channel response according to the first signal in the downlink signal, and obtain the downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

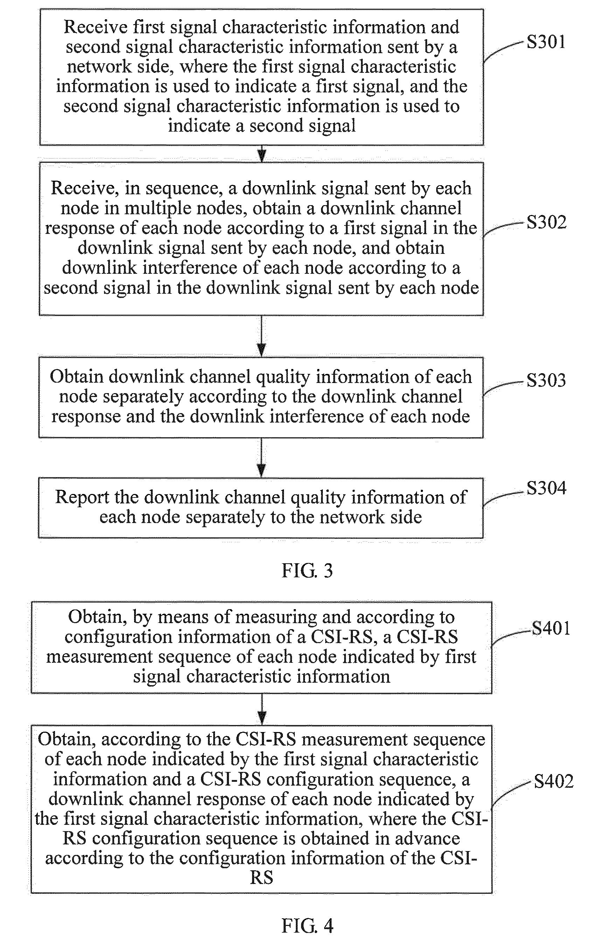

FIG. 3 is a flowchart of another embodiment of a method for measuring channel quality according to the present invention. As shown in FIG. 3, the method includes:
S301: Receive first signal characteristic information and second signal characteristic information sent by a network side, where the first signal characteristic information is used to indicate a first signal, and the second signal characteristic information is used to indicate a second signal.
S302: Receive, in sequence, a downlink signal sent by each node in multiple nodes, obtain a downlink channel response of each node according to the first signal in the downlink signal sent by each node, and obtain downlink interference of each node according to the second signal in the downlink signal sent by each node.
S303: Obtain downlink channel quality information of each node separately according to the downlink channel response and the downlink interference of each node.
S304: Report the downlink channel quality information of each node separately to the network side.

The foregoing steps are executed by a user equipment (user equipment UE). The UE needs to measure downlink channel quality of multiple nodes. The node may be a device having receiving and sending functions, such as an AP, an RRE, an RRH, an RRU, a relay (Relay) node, and an antenna unit in a base station or a home base station. One node may correspond to one cell of the UE.

The first signal characteristic information is used to indicate the first signal, so that when receiving the downlink signal sent by each node in the multiple nodes, the UE may measure the first signal in the downlink signal to obtain the downlink channel response. For example, the first signal indicated by the first signal characteristic information may be a CSI-RS, and the first signal characteristic information may include configuration information of the CSI-RS, such as transmission time, a transmission periodicity, a time-frequency grid, or a number of an antenna port for transmission. When receiving the downlink signal sent by each node, the UE measures the CSI-RS by using the configuration information of the CSI-RS, which is included in the first signal characteristic information, so as to obtain the downlink channel response.

The second signal characteristic information is used to indicate the second signal, so that when receiving the downlink signal sent by each node in the multiple nodes, the UE may measure the second signal in the downlink signal to obtain the downlink interference. For example, the second signal indicated by the second signal characteristic information may be a data field signal or a CSI-RS or the like, and the second signal characteristic information may include configuration information of the data field signal or the configuration information of the CSI-RS, such as transmission time, a transmission periodicity, a time-frequency grid, or a number of an antenna port for transmission. When receiving the downlink signal sent by each node, the UE measures the data field signal or the CSI-RS by using the configuration information of the data field signal or the configuration information of the CSI-RS, which is included in the second signal characteristic information, so as to obtain the downlink interference.

As an optional implementation manner, the first signal characteristic information may be used to indicate the first signal of a node corresponding to a secondary cell of the UE, and the second signal characteristic information may be used to indicate the second signal of the node corresponding to the secondary cell of the UE. In this case, the UE receives, in sequence, the downlink signal sent by each node of a secondary cell, and after receiving the downlink signal sent by each node, the UE may measure the first signal in the downlink signal to obtain downlink channel response of each node; in the same way, after receiving the downlink signal sent by each node corresponding to a secondary cell, the UE may measure the second signal in the downlink signal to obtain downlink interference of each node. The base station may control a node corresponding to a primary cell of the UE to send the downlink signal to the UE in a period of time different from a period of time in which a node of a secondary cell sends the downlink signal to the UE, so that the UE may measure the downlink channel quality information corresponding to the node of the primary cell by using the prior art.

It should be noted that, the base station may control a sequence of sending, by each node in different periods of time, the downlink signal to the UE to remain unchanged, so that the UE may determine, according to a sequence of obtaining the downlink channel response and a sequence of obtaining the downlink interference, which obtained downlink channel response and downlink interference correspond to a same node, so as to obtain the downlink channel quality of each node. The UE may also report the downlink channel quality of each node to the base station according to a sequence of receiving the downlink signal.

As another feasible implementation manner, the first signal characteristic information may be used to indicate the first signal of a node corresponding to a primary cell of the UE and the first signal of a node corresponding to a secondary cell of the UE, and the second signal characteristic information may be used to indicate the second signal of the node corresponding to the primary cell of the UE and the second signal of the node corresponding to the secondary cell of the UE. In this case, the UE receives, in sequence, the downlink signal sent by the node of the primary cell and the downlink signal sent by each node of a secondary cell, and after receiving the downlink signal sent by each node, the UE may measure the second signal in the downlink signal to obtain the downlink interference of each node.

According to the method for measuring channel quality provided in this embodiment, the UE receives the first signal characteristic information indicating the first signal and the second signal characteristic information indicating the second signal, which are sent by the node, and the multiple nodes are controlled to send the downlink signals to the UE in turn. When receiving the downlink signal sent by each node, the UE may obtain the downlink channel response according to the first signal in the downlink signal, and obtain the downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

It is described in the foregoing embodiment that, as a feasible implementation manner, the first signal characteristic information sent by the network side to the UE may be used to indicate the first signal of each node corresponding to a secondary cell of the UE, and the second signal characteristic information may be used to indicate the second signal of each node corresponding to a secondary cell of the UE.

As another feasible implementation manner, the first signal characteristic information sent by the network side to the UE may be used to indicate the first signal of the node corresponding to a primary cell of the UE and the first signal of each node corresponding to a secondary cell of the UE, and the second signal characteristic information is used to indicate the second signal of the node corresponding to the primary cell of the UE and the second signal of each node corresponding to a secondary cell of the UE.

Correspondingly, the UE receives, in sequence, the downlink signal that is indicated by the first signal characteristic information and/or the second signal characteristic information and sent by each node, obtains the downlink channel response of each node according to the first signal that is indicated by the first signal characteristic information and is in the downlink signal sent by each node, and obtains the downlink interference of each node according to the second signal that is indicated by the second signal characteristic information and is in the downlink signal sent by each node.

The following presents specific embodiments for implementing the foregoing procedures.

Under normal circumstances, the UE may measure a downlink channel according to a downlink CSI-RS signal sent by each node. Therefore, as a feasible implementation manner, the first signal indicated by the first signal characteristic information sent by a network side node under control of the base station to the UE may be the CSI-RS. The first signal characteristic information may further include configuration information of the CSI-RS, and the configuration information includes at least one of the following information: transmission time, a transmission periodicity, a time-frequency grid, and a number of an antenna port for transmission.

Correspondingly, as shown in FIG. 4, a procedure, executed by the UE after receiving the first signal characteristic information, of obtaining a downlink channel response of each node according to a first signal that is indicated by the first signal characteristic information and is in a downlink signal sent by each node may include the following steps:
S401: Obtain, by means of measuring and according to the configuration information of the CSI-RS, a CSI-RS measurement sequence of each node indicated by the first signal characteristic information.
   Each node indicated by the first signal characteristic information may be each node of a secondary cell of the UE, and may also be a node of a primary cell of the UE and each node of a secondary cell of the UE.
S402: Obtain, according to the CSI-RS measurement sequence of each node indicated by the first signal characteristic information and a CSI-RS configuration sequence, the downlink channel response of each node indicated by the first signal characteristic information, where the CSI-RS configuration sequence is obtained in advance according to the configuration information of the CSI-RS.

B=A*H, where A is the CSI-RS configuration sequence obtained in advance by the UE according to the configuration information of the CSI-RS, the CSI-RS configuration sequence indicates a CSI-RS sequence sent by each node, B is the CSI-RS measurement sequence actually measured by the UE in S401, and H is the downlink channel response. Therefore, the UE may obtain the downlink channel response H by means of calculation by using B=A*H.

As a feasible implementation manner, a second signal indicated by second signal characteristic information may be a CSI-RS or a data field signal; and the second signal characteristic information may further include: configuration information of the CSI-RS or configuration information of the data field signal.

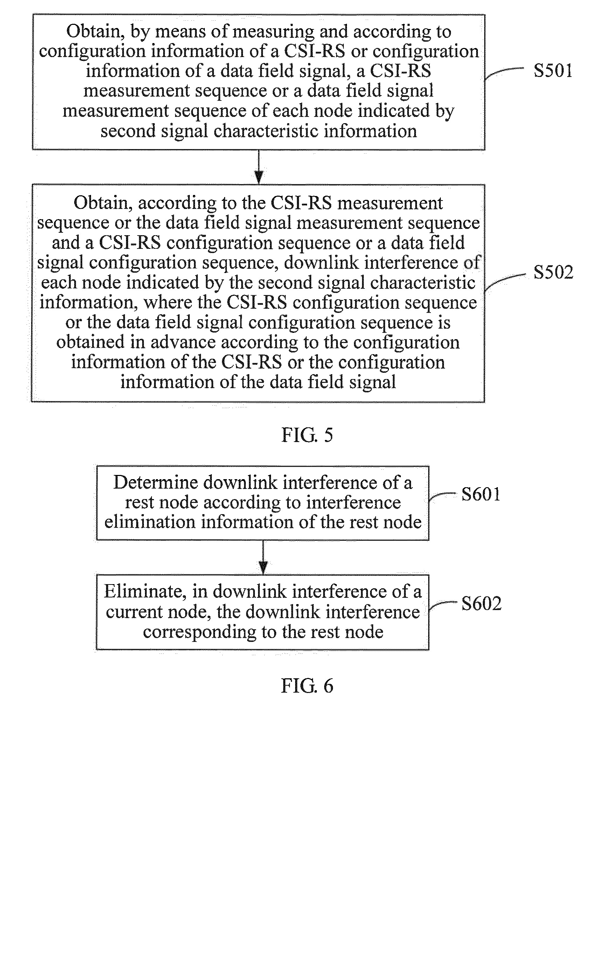

Correspondingly, as shown in FIG. 5, a procedure, executed by a UE after receiving second signaling, of measuring a downlink signal sent by each node and obtaining corresponding downlink interference noise, according to second signal characteristic information, may specifically include the following steps:
S501: Obtain, by means of measuring and according to the configuration information of the CSI-RS or the configuration information of the data field signal, a CSI-RS measurement sequence of each node or a data field signal measurement sequence of each node indicated by the second signal characteristic information.
   Each node indicated by the second signal characteristic information may be each node of a secondary cell of the UE, and may also be a node of a primary cell of the UE and each node of a secondary cell of the UE.
S502: Obtain, according to the CSI-RS measurement sequence or the data field signal measurement sequence, and a CSI-RS configuration sequence or a data field signal configuration sequence, downlink interference of each node indicated by the second signal characteristic information, where the CSI-RS configuration sequence or the data field signal configuration sequence is obtained in advance according to the configuration information of the CSI-RS or the configuration information of the data field signal.

In systems, such as an LTE-Advanced system, situations in which a downlink CSI-RS and a downlink data field signal are interfered are different. When most nodes continuously send data field signals to the UE, downlink interference obtained by measuring the downlink data field signal may more accurately reflect a level of interference noise, suffered by the data field signal, of other nodes; and when less nodes send the data field signals to the UE, downlink interference obtained by measuring the CSI-RS may more accurately reflect the level of the interference noise, suffered by the data field signal, of other nodes, which is beneficial for the base station to perform accurate downlink scheduling on each node.

Accordingly, the base station may control, according to an actual transmission situation of each node, the UE to obtain, by measuring the data field signal or the CSI-RS signal of each node, the downlink interference of each node, which is beneficial for the base station to perform accurate downlink scheduling on each node.

In this embodiment, for a procedure, by the UE according to the second signal characteristic information, of measuring an RS or a data field signal sent by each node to obtain corresponding downlink interference, reference may be made to the embodiment shown in FIG. 4, which is not described herein again.

As a special case, the multiple nodes needing to be measured by the UE may include at least two nodes simultaneously sending downlink signals to the UE. In this case, the second signal characteristic information sent by a network side node under control of the base station to the UE further includes interference elimination information, where the interference elimination information is used for instruction to eliminate downlink interference corresponding to a rest node except a current node that is to obtain downlink interference in the at least two nodes simultaneously sending downlink signals to the UE. That is, the multiple nodes simultaneously sending downlink signals to the UE may be considered as a combination of nodes. For any node in the combination of nodes, the corresponding interference elimination information is used to eliminate, from downlink interference noise corresponding to the node, interference of other nodes in the combination of nodes to the node, and only reserve interference of other nodes in the multiple nodes except the combination of nodes to the node.

Optionally, the interference elimination information includes at least one of the following information: antenna ports for the rest node to send the downlink signal, transmission time of the downlink signal, a time-frequency grid of the downlink signal, and a corresponding cell identification.

Correspondingly, as shown in FIG. 6, for any node in the combination of nodes, simultaneously sending downlink signals to the UE, after the UE obtains downlink interference of each node according to a second signal in a downlink signal sent by the node, the method may further include the following steps:
S601: Determine downlink interference of the rest node according to interference elimination information of the rest node.
S602: Eliminate, in downlink interference of a current node, the downlink interference corresponding to the rest node.

A base station may control nodes or the combination of nodes to send the downlink signal to the UE in turn, and the UE may measure the downlink signals involved in the foregoing embodiments to obtain downlink interference corresponding to different nodes or the combination of nodes. For the downlink signal used to measure interference noise of each node, reference may be made to relevant descriptions in the foregoing embodiments, and descriptions are not made herein again.

The foregoing embodiments provide several feasible embodiments of measuring channel quality information. In the prior art, a UE may obtain configuration information of a downlink signal sent by a node corresponding to a primary cell, so as to measure the downlink signal sent by the node corresponding to the primary cell, thereby obtaining downlink interference of the node corresponding to the primary cell. Therefore, if the first signal characteristic information is used to indicate the first signal of each node corresponding to a secondary cell of the UE, and the second signal characteristic information is used to indicate the second signal of each node corresponding to a secondary cell of the UE, the second signal characteristic information sent by the node on the network side under control of the base station to the UE may further include: at least two measuring time sets, where one measuring time set is used for instructing the UE to measure the node corresponding to the primary cell of the UE; the rest measuring time set is used for instructing the UE to measure each node corresponding to a secondary cell of the UE, and/or is used for instructing the UE to measure the node corresponding to the primary cell of the UE and the node corresponding to the secondary cell of the UE, which simultaneously send the downlink signals to the UE, and/or, is used for instructing the UE to measure the at least two nodes that simultaneously send the downlink signals to the UE and correspond to secondary cells of the UE.

Correspondingly, after receiving the second signal characteristic information, the UE may obtain, in the measuring time set of the node corresponding to the primary cell of the UE, the downlink interference of the node corresponding to the primary cell by using the prior art, such as measuring a common reference signal (Common Reference Signal, CRS) sent by the node of the primary cell; measure, in another measuring time set, the downlink signal sent by each node corresponding to a secondary cell, or measure the downlink signals simultaneously sent by the node of the primary cell and the node of the secondary cell to the UE, or measure the downlink signals sent by the at least two nodes of secondary cells to the UE.

Measuring time may be a TTI, and then a measuring time set may be a set of TTIs. For example, information of two measuring time sets is included, where a TTI period of a measuring time set of the node corresponding to the primary cell is 5, and time offset is one TTI, and then the measuring time set of the node corresponding to the primary cell includes TTIs numbered 1, 6, 11, 16...; a TTI period of another measuring time set is 5, and time offset is 2 TTIs, and then the measuring time set may include TTIs numbered 2, 7, 12, 17...

If downlink channel quality of the node corresponding to the primary cell and another node or a combination of nodes needs to be measured, the base station may control the node corresponding to the primary cell to send, on the TTIs numbered 1, 6, 11, 16..., the downlink signal to the UE; correspondingly, the UE may measure, on the TTIs numbered 1, 6, 11, 16..., downlink interference noise of the node corresponding to the primary cell. The base station further controls the another node or the combination of nodes to send, on the TTIs numbered 2, 7, 12, 17..., the downlink signal to the UE; correspondingly, the UE may measure, on the TTIs numbered 2, 7, 12, 17..., the downlink signal sent by the another node or the combination of nodes.

A person of ordinary skill in the prior art may understand that all or a part of the processes of the methods in the embodiments may be implemented by a computer program instructing relevant hardware. The program may be stored in a computer readable storage medium. When the program is run, the processes of the methods in the embodiments are performed. The storage medium may include a magnetic disk, an optical disc, a read-only memory (Read-Only Memory, ROM), or a random access memory (Random Access Memory, RAM) and the like.

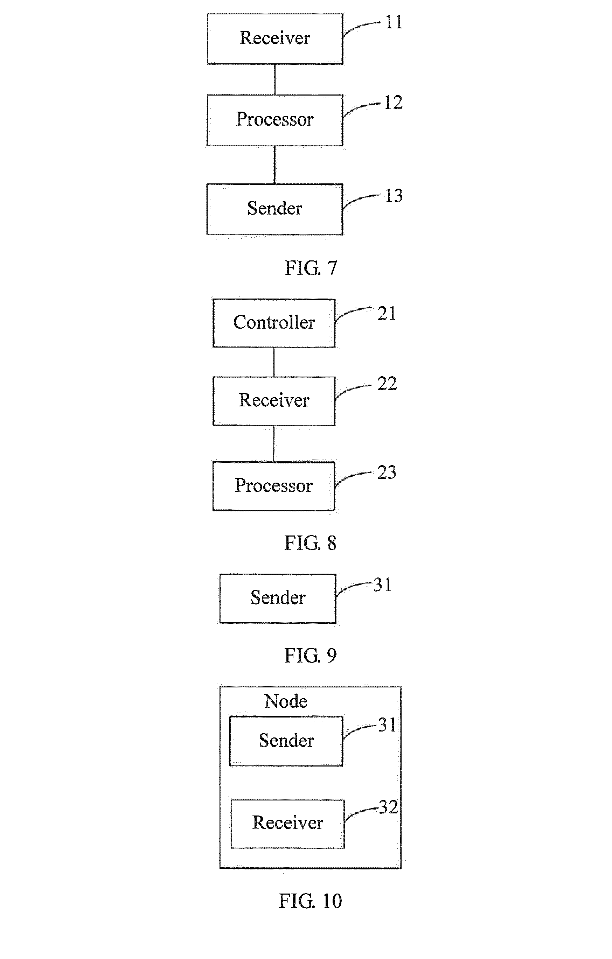

FIG. 7 is a schematic structural diagram of an embodiment of a UE according to the present invention. As shown in FIG. 7, the UE includes: a receiver 11, a processor 12, and a transmitter 13, where
the receiver 11 is configured to receive first signal characteristic information and second signal characteristic information sent by a network side, where the first signal characteristic information is used to indicate a first signal, and the second signal characteristic information is used to indicate a second signal; and is configured to receive, in sequence, a downlink signal sent by each node in multiple nodes;
the processor 12 is configured to obtain a downlink channel response of each node according to the first signal in the downlink signal sent by each node, and obtain downlink interference of each node according to the second signal in the downlink signal sent by each node; and is configured to obtain downlink channel quality information of each node separately according to the downlink channel response and the downlink interference of each node; and
the transmitter 13 is configured to report the downlink channel quality information of each node separately to the network side.

The present invention further provides another embodiment of the UE. Based on the foregoing embodiment, as a feasible implementation manner, the first signal characteristic information received by the receiver 11 is used to indicate the first signal of each node corresponding to a secondary cell of the UE, and the second signal characteristic information is used to indicate the second signal of each node corresponding to a secondary cell of the UE; or the first signal characteristic information received by the receiver is used to indicate the first signal of a node corresponding to a primary cell of the UE and the first signal of each node corresponding to a secondary cell of the UE, and the second signal characteristic information is used to indicate the second signal of the node corresponding to the primary cell of the UE and the second signal of each node corresponding to a secondary cell of the UE.

Correspondingly, the receiver 11 may be specifically configured to receive, in sequence, the downlink signal that is indicated by the first signal characteristic information and/or the second signal characteristic information and sent by each node.

The processor 12 may be specifically configured to obtain the downlink channel response of each node according to the first signal that is indicated by the first signal characteristic information and is in the downlink signal sent by each node, and obtain the downlink interference of each node according to the second signal that is indicated by the second signal characteristic information and is in the downlink signal sent by each node.

As a feasible implementation manner, the first signal is a channel state information reference signal (CSI-RS), the first signal characteristic information further includes configuration information of the CSI-RS, and the configuration information includes at least one of the following information: transmission time, a transmission periodicity, a time-frequency grid, and a number of an antenna port for transmission.

The processor 12 may be specifically configured to obtain, by means of measuring and according to the configuration information of the CSI-RS, a CSI-RS measurement sequence of each node indicated by the first signal characteristic information; and obtain, according to the CSI-RS measurement sequence of each node indicated by the first signal characteristic information and a CSI-RS configuration sequence, downlink channel response of each node indicated by the first signal characteristic information, where the CSI-RS configuration sequence is obtained in advance according to the configuration information of the CSI-RS.

As another feasible implementation manner, the second signal is a CSI-RS or a data field signal, and the second signal characteristic information further includes: configuration information of the CSI-RS or configuration information of the data field signal.

Correspondingly, the processor 12 may be configured to obtain, by means of measuring and according to the configuration information of the CSI-RS or the configuration information of the data field signal, a CSI-RS measurement sequence of each node or a data field signal measurement sequence of each node indicated by the second signal characteristic information; and obtain, according to the CSI-RS measurement sequence or the data field signal measurement sequence, and a CSI-RS configuration sequence or a data field signal configuration sequence, the downlink interference of each node indicated by the second signal characteristic information, where the CSI-RS configuration sequence or the data field signal configuration sequence is obtained in advance according to the configuration information of the CSI-RS or the configuration information of the data field signal.

Further, if the multiple nodes include at least two nodes simultaneously sending downlink signals to the UE, the second signal characteristic information further includes interference elimination information, where the interference elimination information is used for instructing the UE to eliminate downlink interference corresponding to a rest node except a current node that is to obtain downlink interference in the at least two nodes simultaneously sending downlink signals to the UE, and the interference elimination information includes at least one of the following information: antenna ports for the rest node to send the downlink signal, transmission time of the downlink signal, a time-frequency grid of the downlink signal, and a corresponding cell identification (ID).

Correspondingly, the processor 12 may be further configured to: after obtaining the downlink interference of each node according to the second signal in the downlink signal sent by each node, determine downlink interference of the rest node according to the interference elimination information of the rest node; and eliminate, in downlink interference of the current node, the downlink interference corresponding to the rest node.

Further, if the second signal characteristic information is used to indicate the second signal of each node corresponding to a secondary cell of the UE, the second signal characteristic information further includes: at least two measuring time sets, where one measuring time set is used for instructing the UE to measure the node corresponding to the primary cell of the UE; the rest measuring time set is used for instructing the UE to measure each node corresponding to a secondary cell of the UE, and/or is used for instructing the UE to measure the node corresponding to the primary cell of the UE and the node corresponding to the secondary cell of the UE, which simultaneously send the downlink signals to the UE, and/or, is used for instructing the UE to measure the at least two nodes that simultaneously send the downlink signals to the UE and correspond to secondary cells of the UE.

The UE provided in the embodiment of the present invention is an executing device of the method for measuring channel quality provided in the embodiment of the present invention. For a specific procedure of executing, by the executing device, the method for measuring the channel quality, reference may be made to the method embodiment, which is not described herein again.

The UE provided in this embodiment receives the first signal characteristic information indicating the first signal and the second signal characteristic information indicating the second signal, which are sent by the node, and the multiple nodes are controlled to send the downlink signals to the UE in turn. When receiving the downlink signal sent by each node, the UE may obtain the downlink channel response according to the first signal in the downlink signal, and obtain the downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

FIG. 8 is a schematic structural diagram of an embodiment of a base station according to the present invention. As shown in FIG. 8, the base station includes: a controller 21, a receiver 22, and a processor 23;
the controller 21 is configured to control at least one node on a network side to send first signal characteristic information and second signal characteristic information to a UE, where the first signal characteristic information is used to indicate a first signal, and the second signal characteristic information is used to indicate a second signal; and control multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node;
the receiver 22 is configured to receive downlink channel quality information of each node in the multiple nodes, where the downlink channel quality information is obtained by the UE and reported by at least one node on the network side; and
the processor 23 is configured to schedule downlink transmission of each node according to the downlink channel quality information of each node in the multiple nodes.

The present invention further provides another embodiment of the base station. Optionally, first signal characteristic information is used to indicate a first signal of each node corresponding to a secondary cell of a UE, and second signal characteristic information is used to indicate a second signal of each node corresponding to a secondary cell of the UE; or first signal characteristic information is used to indicate a first signal of a node corresponding to a primary cell of the UE and a first signal of each node corresponding to a secondary cell of the UE, and second signal characteristic information is used to indicate a second signal of the node corresponding to the primary cell of the UE and a second signal of each node corresponding to a secondary cell of the UE.

Optionally, the first signal is a channel state information reference signal (CSI-RS), the first signal characteristic information further includes configuration information of the CSI-RS, and the configuration information includes at least one of the following information: transmission time, a transmission periodicity, a time-frequency grid, and a number of an antenna port for transmission.

Optionally, the second signal is a CSI-RS or a data field signal, and the second signal characteristic information further includes: configuration information of the CSI-RS or configuration information of the data field signal.

Further, if the multiple nodes controlled by the controller include at least two nodes simultaneously sending downlink signals to the UE, the second signal characteristic information further includes interference elimination information, where the interference elimination information is used for instruction to eliminate downlink interference corresponding to a rest node except a current node that is to obtain downlink interference in the at least two nodes simultaneously sending downlink signals to the UE, and the interference elimination information includes at least one of the following information: antenna ports for the rest node to send the downlink signal, transmission time of the downlink signal, a time-frequency grid of the downlink signal, and a corresponding cell identification (ID).

Further, if the second signal characteristic information is used to indicate the second signal of each node corresponding to a secondary cell of the UE, the second signal characteristic information further includes: at least two measuring time sets, where one measuring time set is used for instructing the UE to measure the node corresponding to the primary cell of the UE; the rest measuring time set is used for instructing the UE to measure each node corresponding to a secondary cell of the UE, and/or is used for instructing the UE to measure the node corresponding to the primary cell of the UE and the node corresponding to the secondary cell of the UE, which simultaneously send the downlink signals to the UE, and/or, is used for instructing the UE to measure the at least two nodes that simultaneously send the downlink signals to the UE and correspond to secondary cells of the UE.

The base station provided in the embodiment of the present invention is an executing device of the method for measuring channel quality provided in the embodiment of the present invention. For a specific procedure of executing, by the executing device, the method for measuring the channel quality, reference may be made to the method embodiment, which is not described herein again.

The base station provided in this embodiment controls the node to send, to the UE, the first signal characteristic information indicating the first signal and the second signal characteristic information indicating the second signal, and controls the multiple nodes to send the downlink signals to the UE in turn. When receiving the downlink signal sent by each node, the UE may obtain the downlink channel response according to the first signal in the downlink signal, and obtain the downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

FIG. 9 is a schematic structural diagram of an embodiment of a node according to the present invention. As shown in FIG. 9, the node includes: a transmitter 31, where
the transmitter 31 is configured to send, under control of a base station, first signal characteristic information and/or second signal characteristic information to a UE, where the first signal characteristic information is used to indicate a first signal, and the second signal characteristic information is used to indicate a second signal, so that the UE obtains a downlink channel response of each node according to the first signal in a downlink signal sent by each node in multiple nodes, and obtains downlink interference of each node according to the second signal in the downlink signal sent by each node.

FIG. 10 is a schematic structural diagram of another embodiment of a node according to the present invention. As shown in FIG. 10, based on the foregoing embodiment, further, the transmitter 31 in the node may further be configured to send, under control of a base station and with other nodes in the multiple nodes in turn, a downlink signal to a UE.

Further, the node may further include a receiver 32, configured to receive downlink channel quality information, which is obtained and reported by the UE, of at least one node in the multiple nodes.

Correspondingly, the transmitter 31 may be further configured to report the downlink channel quality information of the at least one node in the multiple nodes to the base station.

The node provided in the embodiment of the present invention is an executing device of the method for measuring channel quality provided in the embodiment of the present invention. For a specific procedure of executing, by the executing device, the method for measuring the channel quality, reference may be made to the method embodiment, which is not described herein again.

The node provided in this embodiment sends, under control of the base station, to the UE, first signal characteristic information indicating a first signal and second signal characteristic information indicating a second signal, the multiple nodes are controlled to send the downlink signals to the UE in turn. When receiving the downlink signal sent by each node, the UE may obtain the downlink channel response according to the first signal in the downlink signal, and obtain downlink channel interference according to the second signal characteristic information in the downlink signal, so as to obtain the downlink channel quality information of each node and feed back the downlink channel quality information to the base station. It is achieved that the UE measures all the nodes as long as the network side indicates the first signal characteristic information and the second signal characteristic information to the UE, thereby greatly lowering overheads for the node to send signaling.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some technical features thereof, without departing from the spirit and scope of the technical solutions of the embodiments of the present invention.

## Claims

1. A method for measuring channel quality, comprising:
receiving first signal characteristic information and second signal characteristic information sent by a network side, wherein the first signal characteristic information is used to indicate a first signal, and the second signal characteristic information is used to indicate a second signal;
receiving, in sequence, a downlink signal sent by each node in multiple nodes, obtaining a downlink channel response of each node according to the first signal in the downlink signal sent by each node, and obtaining downlink interference of each node according to the second signal in the downlink signal sent by each node;
obtaining downlink channel quality information of each node separately according to the downlink channel response and the downlink interference of each node; and
reporting the downlink channel quality information of each node separately to the network side.

2. The method according to claim 1, wherein the first signal characteristic information is used to indicate the first signal of each node corresponding to a secondary cell of a user equipment UE, and the second signal characteristic information is used to indicate the second signal of each node corresponding to a secondary cell of the UE; or
the first signal characteristic information is used to indicate the first signal of a node corresponding to a primary cell of the UE and the first signal of each node corresponding to a secondary cell of the UE, and the second signal characteristic information is used to indicate the second signal of the node corresponding to the primary cell of the UE and the second signal of each node corresponding to a secondary cell of the UE; and
the receiving, in sequence, a downlink signal sent by each node in multiple nodes, obtaining a downlink channel response of each node according to the first signal in the downlink signal sent by each node, and obtaining downlink interference of each node according to the second signal in the downlink signal sent by each node comprises:
receiving, in sequence, the downlink signal that is indicated by the first signal characteristic information and/or the second signal characteristic information and sent by each node, obtaining the downlink channel response of each node according to the first signal that is indicated by the first signal characteristic information and is in the downlink signal sent by each node, and obtaining the downlink interference of each node according to the second signal that is indicated by the second signal characteristic information and is in the downlink signal sent by each node.

3. The method according to claim 2, wherein the first signal is a channel state information reference signal CSI-RS, the first signal characteristic information further comprises configuration information of the, CSI-RS, and the configuration information comprises at least one of the following information: transmission time, a transmission periodicity, a time-frequency grid, and a number of an antenna port for transmission; and wherein
the obtaining the downlink channel response of each node according to the first signal that is indicated by the first signal characteristic information and is in the downlink signal sent by each node comprises:
obtaining, by means of measuring and according to the configuration information of the CSI-RS, a CSI-RS measurement sequence of each node indicated by the first signal characteristic information; and
obtaining, according to the CSI-RS measurement sequence of each node indicated by the first signal characteristic information and a CSI-RS configuration sequence, the downlink channel response of each node indicated by the first signal characteristic information, wherein the CSI-RS configuration sequence is obtained in advance according to the configuration information of the CSI-RS.

4. The method according to claim 2 or 3, wherein the second signal is a CSI-RS or a data field signal, and the second signal characteristic information further comprises: configuration information of the CSI-RS or configuration information of the data field signal; and wherein
the obtaining the downlink interference of each node according to the second signal that is indicated by the second signal characteristic information and is in the downlink signal sent by each node comprises:
obtaining, by means of measuring and according to the configuration information of the CSI-RS or the configuration information of the data field signal, a CSI-RS measurement sequence of each node or a data field signal measurement sequence of each node indicated by the second signal characteristic information; and
obtaining, according to the CSI-RS measurement sequence or the data field signal measurement sequence, and a CSI-RS configuration sequence or a data field signal configuration sequence, the downlink interference of each node indicated by the second signal characteristic information, wherein the CSI-RS configuration sequence or the data field signal configuration sequence is obtained in advance according to the configuration information of the CSI-RS or the configuration information of the data field signal.

5. The method according to any one of claims 1 to 4, wherein: if the multiple nodes include at least two nodes simultaneously sending downlink signals to the UE, the second signal characteristic information further comprises interference elimination information, wherein the interference elimination information is used for instruction to eliminate downlink interference corresponding to a rest node except a current node that is to obtain downlink interference in the at least two nodes simultaneously sending downlink signals to the UE, and the interference elimination information comprises at least one of the following information: antenna ports for the rest node to send the downlink signal, transmission time of the downlink signal, a time-frequency grid of the downlink signal, and a corresponding cell identification ID; and
after the obtaining downlink interference of each node according to the second signal in the downlink signal sent by each node, the method further comprising:
determining downlink interference of the rest node according to the interference elimination information of the rest node; and
eliminating, in downlink interference of the current node, the downlink interference corresponding to the rest node.

6. The method according to any one of claims 2 to 5, wherein: if the second signal characteristic information is used to indicate the second signal of each node corresponding to a secondary cell of the UE, the second signal characteristic information further comprises: at least two measuring time sets, wherein one measuring time set is used for instructing the UE to measure a node corresponding to a primary cell of the UE; the rest measuring time set is used for instructing the UE to measure each node corresponding to a secondary cell of the UE, and/or is used for instructing the UE to measure a node corresponding to a primary cell of the UE and a node corresponding to a secondary cell of the UE, which simultaneously send downlink signals to the UE, and/or, is used for instructing the UE to measure at least two nodes that simultaneously send downlink signals to the UE and correspond to secondary cells of the UE.

7. A method for measuring channel quality, comprising:
controlling at least one node on a network side to send first signal characteristic information and second signal characteristic information to a user equipment UE, wherein the first signal characteristic information is used to indicate a first signal, and the second signal characteristic information is used to indicate a second signal;
controlling multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node;
receiving downlink channel quality information of each node in the multiple nodes, wherein the downlink channel quality information is obtained by the UE and reported by at least one node on the network side; and
scheduling downlink transmission of each node according to the downlink channel quality information of each node in the multiple nodes.

8. The method according to claim 7, wherein the first signal characteristic information is used to indicate the first signal of each node corresponding to a secondary cell of the UE, and the second signal characteristic information is used to indicate the second signal of each node corresponding to a secondary cell of the UE; or
the first signal characteristic information is used to indicate the first signal of a node corresponding to a primary cell of the UE and the first signal of each node corresponding to a secondary cell of the UE, and the second signal characteristic information is used to indicate the second signal of the node corresponding to the primary cell of the UE and the second signal of each node corresponding to a secondary cell of the UE.

9. The method according to claim 8, wherein the first signal is a channel state information reference signal CSI-RS, the first signal characteristic information further comprises configuration information of the CSI-RS, and the configuration information comprises at least one of the following information: transmission time, a transmission periodicity, a time-frequency grid, and a number of an antenna port for transmission.

10. The method according to claim 8 or 9, wherein the second signal is a CSI-RS or a data field signal, and wherein the second signal characteristic information further comprises: configuration information of the CSI-RS or configuration information of the data field signal.

11. The method according to any one of claims 7 to 10, wherein: if the multiple nodes includes at least two nodes simultaneously sending downlink signals to the UE, the second signal characteristic information further comprises interference elimination information, wherein the interference elimination information is used for instruction to eliminate downlink interference corresponding to a rest node except a current node that is to obtain downlink interference in the at least two nodes simultaneously sending downlink signals to the UE, and the interference elimination information comprises at least one of the following information: antenna ports for the rest node to send the downlink signal, transmission time of the downlink signal, a time-frequency grid of the downlink signal, and a corresponding cell identification ID.

12. The method according to any one of claims 8 to 11, wherein: if the second signal characteristic information is used to indicate the second signal of each node corresponding to a secondary cell of the UE, the second signal characteristic information further comprises: at least two measuring time sets, wherein one measuring time set is used for instructing the UE to measure a node corresponding to a primary cell of the UE; the rest measuring time set is used for instructing the UE to measure each node corresponding to a secondary cell of the UE, and/or is used for instructing the UE to measure a node corresponding to a primary cell of the UE and a node corresponding to a secondary cell of the UE, which simultaneously send downlink signals to the UE, and/or, is used for instructing the UE to measure at least two nodes that simultaneously send downlink signals to the UE and correspond to secondary cells of the UE.

13. A method for measuring channel quality, comprising:
sending, under control of a base station, first signal characteristic information and/or second signal characteristic information to a user equipment UE, wherein the first signal characteristic information is used to indicate a first signal, and the second signal characteristic information is used to indicate a second signal, so that the UE obtains a downlink channel response of each node according to the first signal in a downlink signal sent by each node in multiple nodes, and obtains downlink interference of each node according to the second signal in the downlink signal sent by each node.

14. The method according to claim 13, further comprising:
sending, under control of the base station and with other nodes in the multiple nodes in turn, the downlink signal to the UE.

15. The method according to claim 13 or 14, further comprising:
receiving downlink channel quality information, which is obtained and reported by the UE, of at least one node in the multiple nodes; and
reporting the downlink channel quality information of the at least one node in the multiple nodes to the base station.

16. A user equipment UE, comprising:
a receiver, configured to receive first signal characteristic information and second signal characteristic information sent by a network side, wherein the first signal characteristic information is used to indicate a first signal, and the second signal characteristic information is used to indicate a second signal; and configured to receive, in sequence, a downlink signal sent by each node in multiple nodes;
a processor, configured to obtain a downlink channel response of each node according to the first signal in the downlink signal sent by each node, and obtain downlink interference of each node according to the second signal in the downlink signal sent by each node; and configured to obtain downlink channel quality information of each node separately according to the downlink channel response and the downlink interference of each node; and
a transmitter, configured to report the downlink channel quality information of each node separately to the network side.

17. The UE according to claim 16, wherein the first signal characteristic information received by the receiver is used to indicate the first signal of each node corresponding to a secondary cell of the UE, and the second signal characteristic information is used to indicate the second signal of each node corresponding to a secondary cell of the UE; or the first signal characteristic information received by the receiver is used to indicate the first signal of a node corresponding to a primary cell of the UE and the first signal of each node corresponding to a secondary cell of the UE, and the second signal characteristic information is used to indicate the second signal of the node corresponding to the primary cell of UE and the second signal of each node corresponding to a secondary cell of the UE;
the receiver is specifically configured to receive, in sequence, the downlink signal that is indicated by the first signal characteristic information and/or the second signal characteristic information and sent by each node; and
the processor is specifically configured to obtain the downlink channel response of each node according to the first signal that is indicated by the first signal characteristic information and is in the downlink signal sent by each node, and obtain the downlink interference of each node according to the second signal that is indicated by the second signal characteristic information and is in the downlink signal sent by each node.

18. The UE according to claim 17, wherein the first signal is a channel state information reference signal, CSI-RS, the first signal characteristic information further comprises configuration information of the CSI-RS, and the configuration information comprises at least one of the following information: transmission time, a transmission periodicity, a time-frequency grid, and a number of an antenna port for transmission; and
the processor is specifically configured to obtain, by means of measuring and according to the configuration information of the CSI-RS, a CSI-RS measurement sequence of each node indicated by the first signal characteristic information; and obtain, according to the CSI-RS measurement sequence of each node indicated by the first signal characteristic information and a CSI-RS configuration sequence, the downlink channel response of each node indicated by the first signal characteristic information, wherein the CSI-RS configuration sequence is obtained in advance according to the configuration information of the CSI-RS.

19. The UE according to claim 17 or 18, wherein the second signal is a CSI-RS or a data field signal, and wherein the second signal characteristic information further comprises: configuration information of the CSI-RS or configuration information of the data field signal; and
the processor is specifically configured to obtain, by means of measuring and according to the configuration information of the CSI-RS or the configuration information of the data field signal, a CSI-RS measurement sequence of each node or a data field signal measurement sequence of each node indicated by the second signal characteristic information; and obtain, according to the CSI-RS measurement sequence or the data field signal measurement sequence, and a CSI-RS configuration sequence or a data field signal configuration sequence, the downlink interference of each node indicated by the second signal characteristic information, wherein the CSI-RS configuration sequence or the data field signal configuration sequence is obtained in advance according to the configuration information of the CSI-RS or the configuration information of the data field signal.

20. The UE according to any one of claims 16 to 19, wherein: if the multiple nodes include at least two nodes simultaneously sending downlink signals to the UE, the second signal characteristic information further comprises interference elimination information, wherein the interference elimination information is used for instruction to eliminate downlink interference corresponding to a rest node except a current node that is to obtain downlink interference in the at least two nodes simultaneously sending downlink signals to the UE, and the interference elimination information comprises at least one of following information: antenna ports for the rest node to send the downlink signal, transmission time of the downlink signal, a time-frequency grid of the downlink signal, and a corresponding cell identification ID; and
the processor is further configured to: after obtaining the downlink interference of each node according to the second signal in the downlink signal sent by each node, determine downlink interference of the rest node according to the interference elimination information of the rest node; and eliminate, in downlink interference of the current node, the downlink interference corresponding to the rest node.

21. The UE according to any one of claims 17 to 20, wherein: if the second signal characteristic information is used to indicate the second signal of each node corresponding to a secondary cell of the UE, the second signal characteristic information further comprises: at least two measuring time sets, wherein one measuring time set is used for instructing the UE to measure a node corresponding to a primary cell of the UE; the rest measuring time set is used for instructing the UE to measure each node corresponding to a secondary cell of the UE, and/or is used for instructing the UE to measure a node corresponding to a primary cell of the UE and a node corresponding to a secondary cell of the UE, which simultaneously send downlink signals to the UE, and/or, is used for instructing the UE to measure at least two nodes that simultaneously send downlink signals to the UE and correspond to secondary cells of the UE.

22. A base station, comprising:
a controller, configured to control at least one node on a network side to send first signal characteristic information and second signal characteristic information to a user equipment UE, wherein the first signal characteristic information is used to indicate a first signal, and the second signal characteristic information is used to indicate a second signal; and control multiple nodes to send downlink signals to the UE in turn, so that the UE obtains a downlink channel response of each node according to the first signal in the downlink signal sent by each node in the multiple nodes, and obtains downlink interference of each node according to the second signal in the downlink signal sent by each node;
a receiver, configured to receive downlink channel quality information of each node in the multiple nodes, wherein the downlink channel quality information is obtained by the UE and reported by at least one node on the network side; and
a processor, configured to schedule downlink transmission of each node according to the downlink channel quality information of each node in the multiple nodes.

23. The base station according to claim 22, wherein the first signal characteristic information is used to indicate the first signal of each node corresponding to a secondary cell of the UE, and the second signal characteristic information is used to indicate the second signal of each node corresponding to a secondary cell of the UE; or the first signal characteristic information is used to indicate the first signal of a node corresponding to a primary cell of the UE and the first signal of each node corresponding to a secondary cell of the UE, and the second signal characteristic information is used to indicate the second signal of the node corresponding to the primary cell of the UE and the second signal of each node corresponding to a secondary cell of the UE.

24. The base station according to claim 23, wherein the first signal is a channel state information reference signal, CSI-RS, the first signal characteristic information further comprises configuration information of the CSI-RS, and the configuration information comprises at least one of the following information: transmission time, a transmission periodicity, a time-frequency grid, and a number of an antenna port for transmission.

25. The base station according to claim 23 or 24, wherein the second signal is a CSI-RS or a data field signal, and wherein the second signal characteristic information further comprises: configuration information of the CSI-RS or configuration information of the data field signal.

26. The base station according to any one of claims 22 to 25, wherein: if the multiple nodes controlled by the controller includes at least two nodes simultaneously sending downlink signals to the UE, the second signal characteristic information further comprises interference elimination information, wherein the interference elimination information is used for instruction to eliminate downlink interference corresponding to a rest node except a current node that is to obtain downlink interference in the at least two nodes simultaneously sending downlink signals to the UE, and the interference elimination information comprises at least one of the following information: antenna ports for the rest node to send the downlink signal, transmission time of the downlink signal, a time-frequency grid of the downlink signal, and a corresponding cell identification ID.

27. The base station according to any one of claims 23 to 26, wherein: if the second signal characteristic information is used to indicate the second signal of each node corresponding to a secondary cell of the UE, the second signal characteristic information further comprises: at least two measuring time sets, wherein one measuring time set is used for instructing the UE to measure a node corresponding to a primary cell of the UE; the rest measuring time set is used for instructing the UE to measure each node corresponding to a secondary cell of the UE, and/or is used for instructing the UE to measure a node corresponding to a primary cell of the UE and a node corresponding to a secondary cell of the UE, which simultaneously send downlink signals to the UE, and/or, is used for instructing the UE to measure at least two nodes that simultaneously send downlink signals to the UE and correspond to secondary cells of the UE.

28. A node, comprising:
a transmitter, configured to send, under control of a base station, first signal characteristic information and/or second signal characteristic information to a user equipment UE, wherein the first signal characteristic information is used to indicate a first signal, and the second signal characteristic information is used to indicate a second signal, so that the UE obtains a downlink channel response of each node according to the first signal in a downlink signal sent by each node in multiple nodes, and obtains downlink interference of each node according to the second signal in the downlink signal sent by each node.

29. The node according to claim 28, wherein the transmitter is further configured to send, under control of the base station and with other nodes in the multiple nodes in turn, the downlink signal to the UE.

30. The node according to claim 28 or 29, further comprising: a receiver, configured to receive downlink channel quality information, which is obtained and reported by the UE, of at least one node in the multiple nodes; and
the transmitter is further configured to report the downlink channel quality information of the at least one node in the multiple nodes to the base station.
